# EUROPÄISCHE PATENTSCHRIFT

(11) **EP 1 250 782 B1**
(45) Veröffentlichungstag und Bekanntmachung des Hinweises auf die Patenterteilung: **30.11.2005**
(21) Anmeldenummer: 00991578.6
(22) Anmeldetag: 23.12.2000
(51) Int. Cl.: H04L 25/03, H04J 3/06

(54) **VERFAHREN UND VORRICHTUNG ZUR SYNCHRONISATION VON DATEN-ÜBERTRAGUNGSEINRICHTUNGEN**
METHOD AND DEVICE FOR SYNCHRONISATION OF DATA TRANSFER DEVICES
PROCEDE ET DISPOSITIF POUR SYNCHRONISER DES INSTALLATIONS DE TRANSMISSION DE DONNEES

(30) Priorität: 14.01.2000 DE 10001491
(43) Veröffentlichungstag der Anmeldung: 23.10.2002
(73) Patentinhaber: ROBERT BOSCH GMBH, 70442 Stuttgart (DE)
(72) Erfinder: KOWALEWSKI, Frank, 38228 Salzgitter (DE)
(86) Internationale Anmeldenummer: PCT/DE2000/004651
(87) Internationale Veröffentlichungsnummer: WO 2001/052490

(56) Entgegenhaltungen:
- EP-A- 0 180 066
- EP-A- 0 928 088
- WO-A-99/56441

## Beschreibung

Die Erfindung betrifft ein Verfahren zur Synchronisation von Datenübertragungseinrichtungen, bei denen ein Datensignal in Form eines Datenstroms von Datenbursts zwischen einer ersten Station und einer zweiten Station übertragen wird, wobei in Zusammenhang mit dem jeweiligen Datenburst ein Referenzsignal gesendet wird. Die Erfindung betrifft ebenfalls eine entsprechende Vorrichtung zur Synchronisation von Datenübertragungseinrichtungen.

Obwohl prinzipiell auf beliebige Datenübertragungen anwendbar, werden die vorliegende Erfindung sowie die ihr zu Grunde liegende Problematik in Bezug auf ein zellulares CDMA-Datenübertragungssystem (CDMA = Code Division Multiple Access) erläutert, die einen Übertragungsmodus verwenden, der die Übertragung eines Referenzsignals erfordert.

### STAND DER TECHNIK

Durch Code-Vielfachzugriff (CDMA = Code Division Multiple Access) lassen sich mehrere Datenströme gleichzeitig über ein gemeinsames Frequenzband übertragen. Dabei werden die zu übertragenden Symbole der Datenströme mit sogenannten Spreizungscodes moduliert.

Die mit verschiedenen Codes gleichzeitig übertragenen Datenströme stören sich i.a. gegenseitig: Mehrwegeausbreitung führt zur Überlagerung von nacheinander gesendeten Datensymbolen (inter symbol interference, ISI). CDMA-Kodierung und Mehrwegeausbreitung sind die Ursache von Mehrfachnutzerinterferenz (multiple access interference, MAI).

Die Interferenzen lassen sich z.B. im Empfänger eliminieren, wenn dort die Impulsantwort des Kanals bekannt ist, wie aus K. D. Kammeyer: "Nachrichtenübertragung", 2. Aufl., Reihe Informationstechnik, Teubner, Stuttgart, 1996 und aus A. Klein, G.K. Kaleh und P.W. Baier: "Zero Forcing and Minimum Mean-Square-Error Equalization for Multiuser Detection in Code Division Multiple Access Channels", IEEE Trans. Vehic. Tech., Bd. 45 (1996), 276-287 entnehmbar. Die Kanalimpulsantwort kann z.B. im Empfänger aus einem empfangenen Referenzsignal geschätzt werden.

Interferenzen lassen sich aber auch im Sender eliminieren, wenn dort die Kanalimpulsantworten bekannt sind. Dann muß die Kanalimpulsantwort nicht mehr im Empfänger, sondern im Sender geschätzt werden. Also ist die Übertragung eines Referenzsignals vom Empfänger zum Sender notwendig.

Insbesondere ISI und MAI lassen sich im Sender durch gemeinsame Vorentzerrung (joint predistortion, JP) eliminieren.

Um versendete Daten durch den Empfänger detektieren zu können, muß allerdings der Empfänger auf den Sender synchronisiert sein. Dies geschieht üblicherweise durch Auswertung des mitübertragenen Referenzsignals im Empfänger (siehe z.B. B. Sklar, "Digital Communications", Prentice Hall Int. Inc., Englewood Cliffs, 1988).

Übertragungssysteme mit Interferenzeliminierung im Empfänger und Systeme mit Eliminierung im Sender können auch miteinander kombiniert werden, wie aus Bosch: "Mixed Use of Joint Predistortion and Joint Detection in the UTRA TDD Mode", ETSI Tdoc SMG2 UMTS-L1 205/98 bekannt ist.

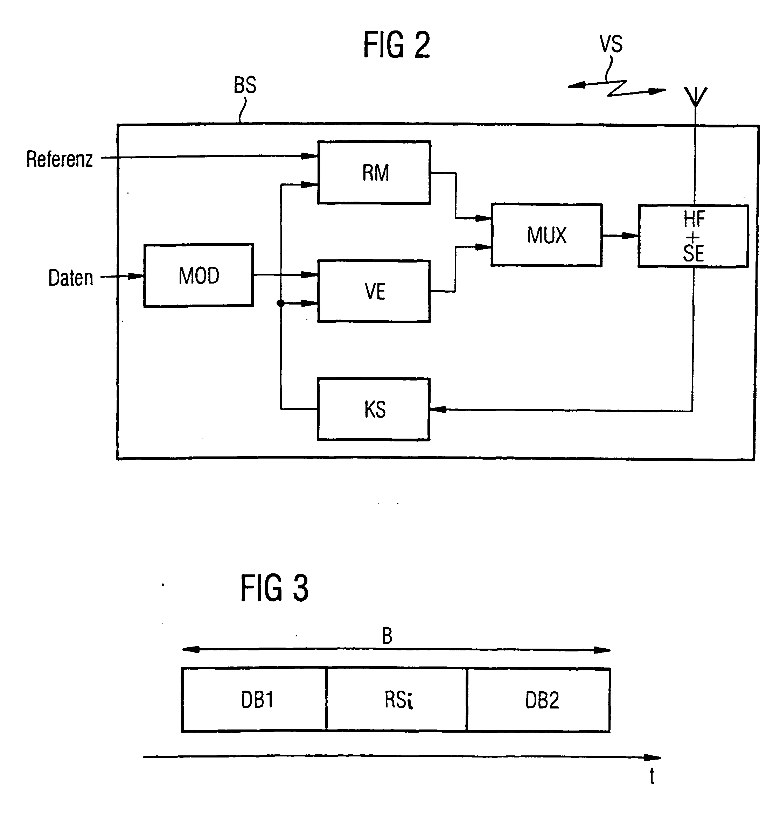

Fig. 3 zeigt eine übliche Datenburststruktur bei einem CDMA-Datenübertragungssystem, insbesondere einem zellularen CDMA-Datenübertragungssytem, das im Zeitduplex (TDD) arbeitet.

In Fig. 3 bezeichnen B einen Datenburst, t die Zeit, DB1 einen ersten Datenblock, DB2 einen zweiten Datenblock und RSi einen Referenzsignaldatenblock.

Fig. 4 zeigt eine schematische Darstellung der Hochfrequenz(HF)-Verarbeitung in einem bekannten CDMA-Datenübertragungssystem, und zwar Fig. 4a in der Rückwärtsstrecke und Fig. 4b in der Vorwärtsstrecke.

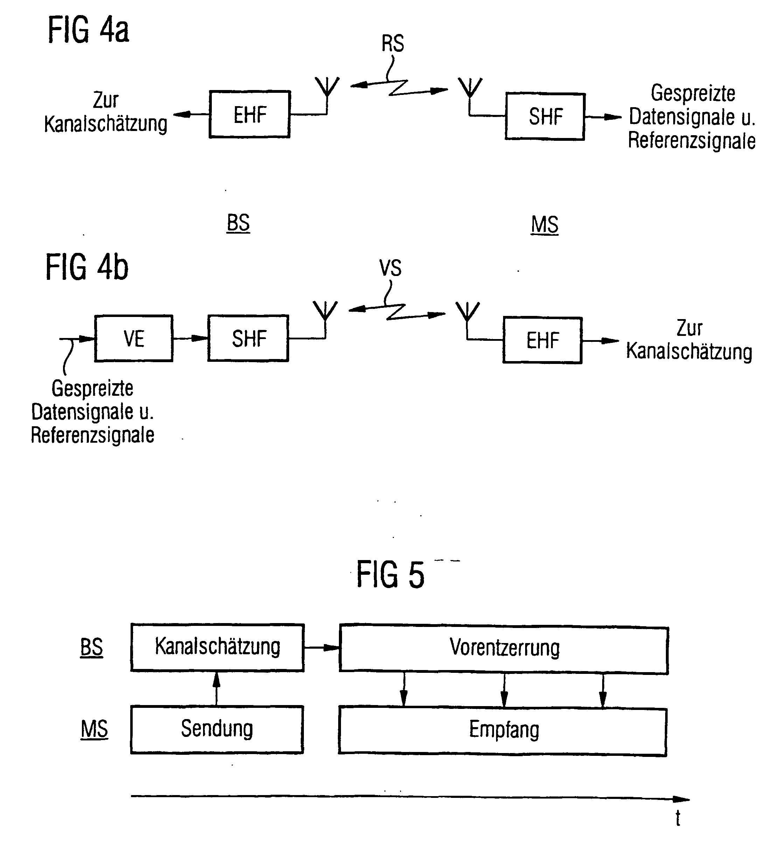

In Figur 4 bezeichnen BS eine Basisstation, MS eine Mobilstation, EHF eine jeweilige Empfangs-HF-Stufe, SHF eine jeweilige Sende-HF-Stufe, RS eine Rückwärtsstrecke sowie VS eine Vorwärtstrecke.

In der Rückwärtsstrecke RS werden gespreizte Datensignale und Referenzsignale z.B. über die in Figur 3 gezeigten Datenbursts B an die Basisstation zur Kanalschätzung übertragen.

In der Vorwärtsstrecke VS werden gespreizte Datensignale zunächst in einer Vorentzerrungseinrichtung VE vorentzerrt, wobei das Ergebnis der Kanalschätzung in der Rückwärtsstrecke verwendet wird, und dann an die Mobilstation übertragen. Referenzsignale werden ohne Vorentzerrung in Vorwärtsrichtung übertragen.

Figur 5 zeigt eine Darstellung des zeitlichen Ablaufs bei TDD-Betrieb mit Vorentzerrung für das CDMA-Datenübertragungssystem nach Fig. 4.

Zunächst sendet die Mobilstation MS einen Datenburst mit einem Referenzsignaldatenblock RSi an die Basisstation BS, welche diesen zur Kanalschätzung verwendet. Basierend auf dem Ergebnis der Kanalschätzung führt die Vorentzerrungseinrichtung VE eine. Vorentzerrung durch und sendet entsprechende vorentzerrte gespreizte Datensignale in Form der Datenbursts B an die Mobilstation.

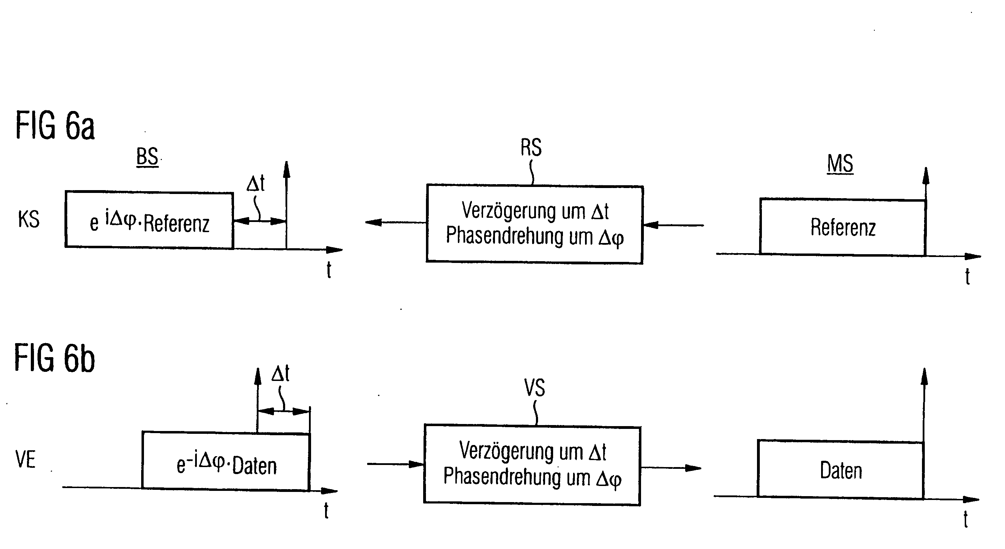

Figur 6 zeigt eine Illustration der Sendezeitpunktverschiebung bei einem bekannten JP-Verfahren bei identischer Vorwärts- und Rückwärtsstrecke, und zwar Fig. 6a in der Rückwärtsstrecke und Fig. 6b in der Vorwärtsstrecke.

Allgemein gesagt regeln die bekannten JP-Verfahren den genauen Sendezeitpunkt der Daten in der Vorwärtsstrecke VS in Abhängigkeit der Kanalschätzungen der Rückwärtsstrecke RS. Wenn die Kanalschätzungen sehr frühe Kanalimpulsantworten enthalten, wird spät gesendet und umgekehrt. Wenn die Übertragungsstrecken in Vorwärts- und Rückwärtsrichtung identisch sind, erübrigt dieser Mechanismus eine Synchronisationsnachführung im Empfänger (hier der Mobilstation MS), da die Signale unabhängig von der Übertragungskanalverzögerung zum selben Zeitpunkt den Empfänger erreichen.

In Fig. 6a sind die zeitlichen Verhältnisse der bei der Vorentzerrung verwendeten Kanalschätzung der Rückwärtsstrecke RS dargestellt und in Fig. 6b die Verhältnisse der Vorwärtsstrecke VS.

Wie Figur 6a entnehmbar, sendet die Mobilstation MS einen Datenburst B mit einem Referenzsignal zu einem bestimmten Zeitpunkt über die Rückwärtsstrecke RS an die Basisstation BS. Das Referenzsignal erleidet dabei eine Verzögerung um Δt (Laufzeitverzögerung) sowie eine Phasendrehung um den Winkel Δϕ.

Daraus wird eine Kanalschätzung KS erstellt, welche wiederum zur Bestimmung der Vorentzerrungsparameter für die Vorentzerrung VE verwendet wird. In der Vorwärtsrichtung erleiden die zu übertragenden Signale ebenfalls eine Verzögerung um die Zeitspanne Δt und eine Phasendrehung um de Winkel Δϕ. Die Vorentzerrung kompensiert diese jedoch durch den Vorhalt Δt und die negative Phasendrehung Δϕ, so dass auch gleichzeitig eine Synchronisation der Daten im Datenburst B erreicht wird.

Die Übertragungsstrecken in Vorwärts- und Rückwärtsrichtung umfassen auch die jeweils verwendeten HF-Teile von Sender und Empfänger. Diese verursachen i.a. unterschiedliche Verzögerungszeiten in Vorwärts- und Rückwärtsstrecke VS bzw. RS. Die Verzögerungszeiten von Vorwärts- und Rückwärtsstrecke VS bzw. RS unterscheiden sich zusätzlich bei veränderlichen Kanälen (wie z.B. bei gegeneinander bewegtem Empfänger und Sender), weil Vorwärts- und Rückwärtsstrecke zeitlich nacheinander verwendet werden. Da lediglich die Verzögerungszeit der Gegenstrecke durch das bekannte JP-Verfahren berücksichtigt wird, muß die Verzögerungszeit der Sendestrecke zusätzlich durch einen Synchronisationsmechanismus im Empfänger berücksichtigt werden.

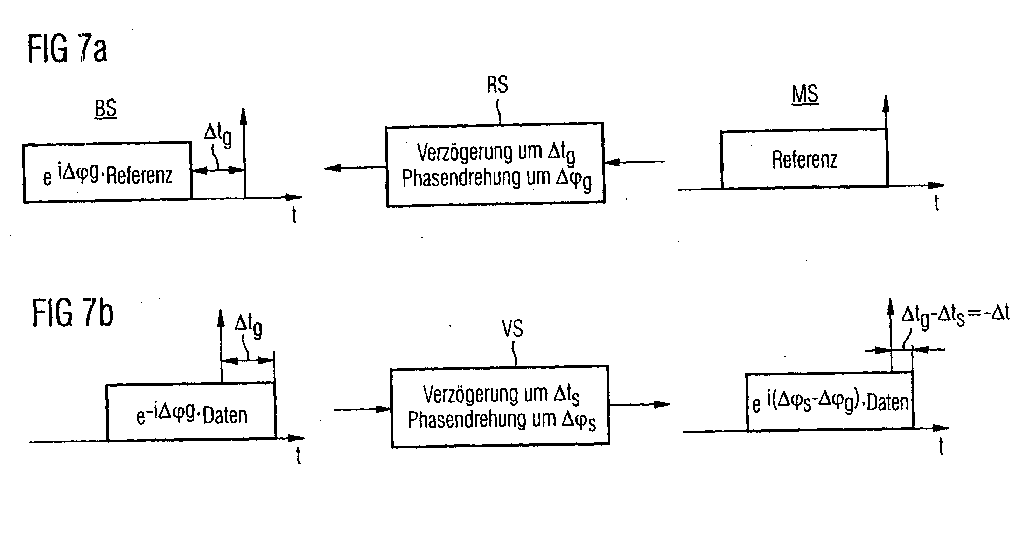

Figur 7 zeigt eine Illustration der Sendezeitpunktverschiebung bei einem bekannten JP-Verfahren bei Laufzeitunterschieden in der Vorwärts- und Rückwärtsstrecke, und zwar Fig. 7a in der Rückwärtsstrecke und Fig. 7b in der Vorwärtsstrecke, wenn keine Synchronisation eingesetzt wird.

Gemäß Figur 7a beträgt die Verzögerung in der Rückwärtsstrecke Δt_{g} und die Phasendrehung in der Rückwärtstrecke Δϕ_{g}. Da in der Vorwärtsstrecke VS die Verzögerung und Phasendrehung verschieden sind, nämlich Δtₛ bzw. Δϕₛ, sind die Daten um das Zeitintervall -Δt = Δt_{g} - Δtₛ asynchron.

Die Sendezeitpunktverschiebungen von bekannten JP-Verfahren werden durch auf Referenzsignalen basierende Synchronisationsmechanismen automatisch berücksichtigt, wenn zur Vorentzerrung Filter verwendet werden, und diese Filter auch auf die Referenzsignale angewendet werden.

Dies hat jedoch den Nachteil, daß keine allgemeinen, nicht auf Filtern basierende JP-Verfahren eingesetzt werden können. Allgemeine JP-Verfahren können jedoch bessere Übertragungsqualitäten liefern als auf Filtern basierende JP-Verfahren.

Übliche Synchronisationsmechanismen, die auf nicht vorentzerrten Referenzsignalen beruhen, berücksichtigen die Sendezeitpunktverschiebungen von JP-Verfahren nicht.

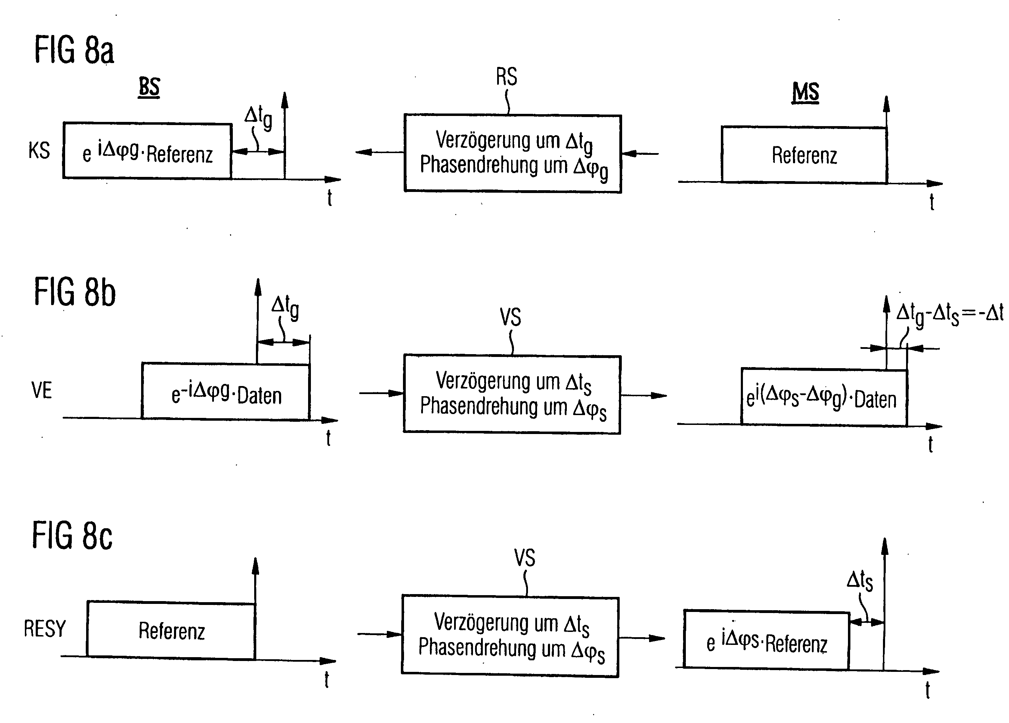

Figur 8 zeigt eine Illustration der Synchronisation bei einem bekannten JP-Verfahren bei Laufzeitunterschieden in der Vorwärts- und Rückwärtsstrecke, und zwar Fig. 8a in der Rückwärtsstrecke und Fig. 8b,c in der Vorwärtsstrecke.

Fig. 8 ist entnehmbar, daß die Datensignale durch Vorentzerrung zeitverschoben gesendet werden, das nicht vorentzerrte Referenzsignal jedoch nicht. Eine auf dem nicht vorentzerrten Referenzsignal basierende Synchronisation RESY findet daher i.a. nicht den für die Daten gewünschten Synchronisationszeitpunkt, sondern ist um Δtₛ asynchron.

### VORTEILE DER ERFINDUNG

Die der vorliegenden Erfindung zu Grunde liegende Idee besteht darin, daß das Referenzsignal in Vorwärtsrichtung unter Berücksichtigung der Kanalschätzung in Rückwärtsrichtung verändert wird und dann in der zweiten Station zur Synchronisation verwendet wird.

Das erfindungsgemäße Verfahren mit den Merkmalen des Anspruches 1.bzw. die entsprechende Vorrichtung nach Anspruch 8 weisen den besonderen Vorteil auf, daß eine Synchronisationsacquisition (erste Synchronisation nach Einschalten des Empfängers) sowie eine Synchronisationsnachführung bei Verwendung von einem allgemeinen beliebigen JP-Verfahren einfach realisierbar sind.

Insbesondere findet eine Berücksichtigung von Laufzeitunterschieden durch verschiedene HF-Verarbeitung in Vorwärts- und Rückwärtsstrecke statt sowie eine Berücksichtigung von Laufzeitunterschieden zwischen Vorwärts- und Rückwärtsstreckenkanal durch einen veränderlichen TDD-Übertragungskanal (z.B. bei gegeneinander bewegtem Empfänger und Sender).

In den Unteransprüchen finden sich vorteilhafte Weiterbildungen und Verbesserungen des jeweiligen Gegenstandes der Erfindung.

Gemäß einer bevorzugten Weiterbildung sind mehrere verschiedene zweite Stationen vorhanden, und für jede zweite Station wird ein individuelles erstes und zweites Referenzsignal gesendet.

Gemäß einer weiteren bevorzugten Weiterbildung wird das zweite Referenzsignal in der ersten Station um den Phasenwinkel der stärksten Kanalimpulsantwortkomponenete in negativer Richtung phasengedreht und um die Laufzeit des ersten Referenzsignals nach früh zeitverschoben.

Gemäß einer weiteren bevorzugten Weiterbildung ist die erste Station eine Basisstation und die zweite Station eine Mobilstation eines TDD-Mobilfunksystems.

Gemäß einer weiteren bevorzugten Weiterbildung wird die Übertragung mittels dem CDMA-Verfahren durchgeführt.

Gemäß einer weiteren bevorzugten Weiterbildung werden mehrere Datenströme entsprechend dem CDMA-Verfahren gleichzeitig übertragen.

Gemäß einer weiteren bevorzugten Weiterbildung weisen die Datenbursts mindestens zwei Datenblöcke auf, zwischen denen ein Block angeordnet ist, der für das Referenzsignal verwendet wird.

### ZEICHNUNGEN

Ein Ausführungsbeispiel der Erfindung ist in der Zeichnung dargestellt und wird in der folgenden Beschreibung näher erläutert.

Es zeigen:

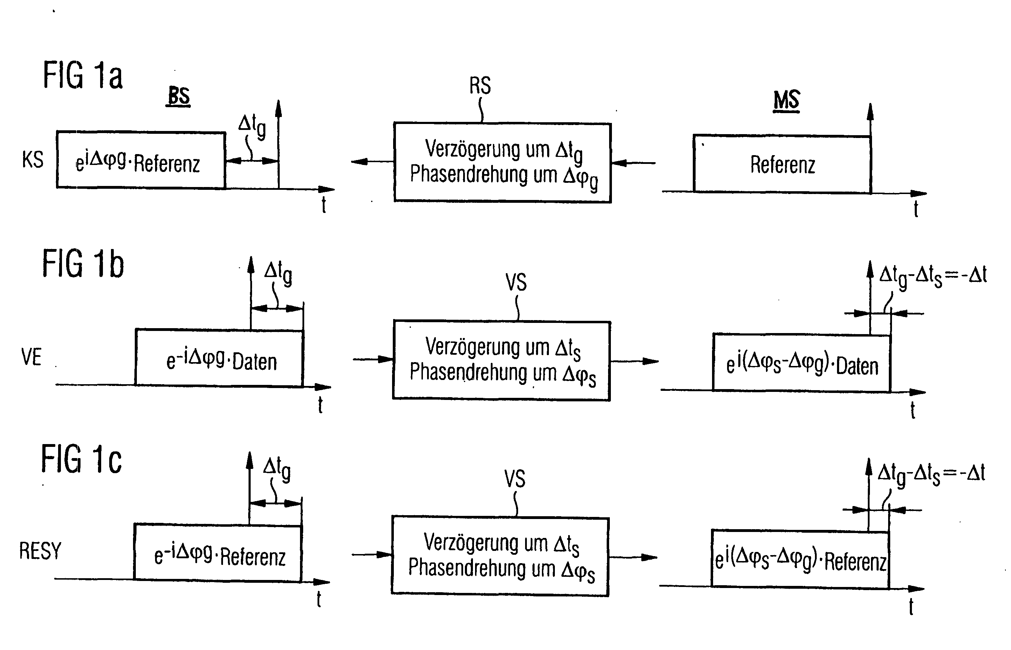

- Figur 1: eine Illustration der Synchronisation bei einem JP-Verfahren bei Laufzeitunterschieden in der Vorwärts- und Rückwärtsstrecke, und zwar Fig. 1a in der Rückwärtsstrecke und Fig. 1b,c in der Vorwärtsstrecke, als Ausführungsform der Erfindung;
- Figur 2: ein Blockdiagramm einer Vorrichtung zur Synchronisation von Datenübertragungseinrichtungen zur Erläuterung einer weiteren Ausführungsform der Erfindung;
- Figur 3: eine übliche Datenburststruktur bei einem CDMA-Datenübertragungssystem;
- Figur 4: eine schematische Darstellung der Hochfrequenz(HF)-Verarbeitung in einem bekannten CDMA-Datenübertragungssystem, und zwar Fig. 4a in der Rückwärtsstrecke und Fig. 4b in der Vorwärtsstrecke;
- Figur 5: eine Darstellung des zeitlichen Ablaufs bei TDD-Betrieb mit Vorentzerrung für das CDMA-Datenübertragungssystem nach Fig. 4;
- Figur 6: eine Illustration der Sendezeitpunktverschiebung bei einem bekannten JP-Verfahren bei identischer Vorwärts- und Rückwärtsstrecke, und zwar Fig. 6a in der Rückwärtsstrecke und Fig. 6b in der Vorwärtsstrecke;
- Figur 7: eine Illustration der Sendezeitpunktverschiebung bei einem bekannten JP-Verfahren bei Laufzeitunterschieden in der Vorwärts- und Rückwärtsstrecke, und zwar Fig. 7a in der Rückwärtsstrecke und Fig. 7b in der Vorwärtsstrecke; und
- Figur 8: eine Illustration der Synchronisation bei einem bekannten JP-Verfahren bei Laufzeitunterschieden in der Vorwärts- und Rückwärtsstrecke, und zwar Fig. 8a in der Rückwärtsstrecke und Fig. 8b,c in der Vorwärtsstrecke.

### BESCHREIBUNG DER AUSFÜHRUNGSBEISPIELE

In den Figuren bezeichnen gleiche Bezugszeichen gleiche oder funktionsgleiche Elemente.

Figur 1 zeigt eine Illustration der Synchronisation bei einem JP-Verfahren bei Laufzeitunterschieden in der Vorwärts- und Rückwärtsstrecke, und zwar Fig. 1a in der Rückwärtsstrecke und Fig. 1b,c in der Vorwärtsstrecke, als Ausführungsform der Erfindung.

Bei diesem Ausführungsbeispiel handelt es sich um ein zellulares CDMA-Mobilfunksystem. Es erfolgt eine burstweise Datenübertragung im TDD-Betrieb mit einer Kanalschätzung in der Rückwärtsstrecke und einer Vorentzerrung in der Vorwärtsstrecke. Ein Datenburst B (vgl. Fig. 3) enthält Referenzsignale zur Synchronisation, nämlich ein Referenzsignal pro Nutzer bzw. Mobilstation MS.

Das Referenzsignal eines Nutzers wird umso früher übertragen, je später seine Kanalimpulsantwort in der Gegenstrecke gemessen wurde. Vor dem Senden an die Mobilstation MS wird das Referenzsignal um den Phasenwinkel der stärksten Kanalimpulsantwortkomponente in negativer Richtung phasengedreht. Die Basisstation schätzt dazu vorher den Kanal mit Hilfe eines ersten Referenzsignals. Im einzelnen werden folgende Schritte durchgeführt:
i) in einem ersten Schritt wird ein erstes Referenzsignal von der Mobilstation MS an die Basisstation BS gesendet;
ii) in einem zweiten Schritt wird in der Basisstation BS eine Kanalschätzung KS basierend auf dem von der Mobilstation MS empfangenen Referenzsignal durchgeführt;
iii) in einem dritten Schritt sendet die Basisstation BS einen anhand der Kanalschätzung vorentzerrten Datenburst B an die Mobilstation MS;
iv) in einem vierten Schritt sendet die Basisstation BS ein anhand der Kanalschätzung verändertes zweites Referenzsignal an die Mobistation MS; und
v) in einem fünften Schritt führt die Mobilstation MS eine Synchronisierung des Datenburst B anhand des zweiten Referenzsignals durch.

Vor der Detektion in der Mobilstation wird das empfangene Signal um den Phasenwinkel der stärksten Kanalimpulsantwortkomponente der Sendestrecke in negativer Richtung phasengedreht. Dadurch werden unterschiedliche Phasendrehungen in Vorwärts- und Rückwärtsrichtung kompensiert.

Es erfolgt ein zeitlich früheres Senden des zweiten Referenzsignals in der Vorwärtsstrecke VS um die Zeit Δt_{g}, um die die Kanalimpulsantwort der Rückwärtsstrecke RS durch den Rückwärtskanal verzögert wird.

Vor dem Senden wird das erste Referenzsignal um den Phasenwinkel Δϕ_{g} der stärksten Kanalimpulsantwortkomponente der Rückwärtsstrecke in negativer Richtung phasengedreht. Die Mobilstation MS synchronisiert sich auf die stärkste Komponente ihrer Kanalschätzung. Die Synchronisationsphase wird berücksichtigt, indem das empfangene Signal vor der Detektion um den Phasenwinkel der stärksten Kanalimpulsantwortkomponente der Sendestrecke in negativer Richtung pnasengedreht wird.

Anders als in dieser Ausführungsform gezeigt, können das Daten- und Referenzsignal zeitlich nacheinander versendet werden. Zur besseren Vergleichbarkeit der zeitlichen Verhältnisse sind allerdings die Signale in Fig. 1 untereinander also simultan gezeichnet.

Figur 2 zeigt ein Blockdiagramm einer Vorrichtung zur Synchronisation von Datenübertragungseinrichtungen zur Erläuterung einer weiteren Ausführungsform der Erfindung, also zur Kanalschätzung in der Rückwärtsstrecke und zum Senden der vorentzerrten Signale und der für die Synchronisation vorbereiteten Referenzsignale.

In Figur 2 bezeichnen zusätzlich zu den bereits eingeführten Bezugszeichen MOD einen Modulator, RM eine Referenzsignal-Modifizierungseinrichtung, MUX einen Multiplexierer, HF einen Hochfrequenzteil und SE eine Schalteinrichtung zur Umschaltung zwischen Sende- und Empfangsbetrieb.

Bei der in Figur 2 dargestellten Vorrichtung erfolgt eine Berücksichtigung der durch den Kanalschätzer KS durchgeführten Kanalschätzung nicht nur hinsichtlich der Vorentzerrung durch die Vorentzerrungseinrichtung VE, sondern auch hinsichtlich der Bildung bzw. Modifizierung des Referenzsignals, wie in Figur 1 ausführlich dargestellt.

Somit wird von der Basisstation BS über die Vorwärtsstrecke an die Mobilstation MS ein jeweils der Kanalschätzung entsprechendes Referenzsignal gesendet, was eine einfache Möglichkeit zur Synchronisation in der Mobilstation MS bietet, da dort der Zeitzusammenhang zwischen, dem Aussenden des Datensignals und dem Aussenden des modifizierten Referenzsignals bekannt ist.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere kann das erfindungsgemäße Verfahren in allen Datenübertragungssystemen angewendet werden, die einen Übertragungsmodus verwenden, der die Übertragung eines Referenzsignals erfordert, und ist nicht auf CDMA-Datenübertragungssysteme beschränkt.

## Patentansprüche

1. Verfahren zur Synchronisation von Datenübertragungseinrichtungen, bei denen ein Datensignal in Form eines Datenstroms von Datenbursts (B) zwischen einer ersten Station (BS) und einer zweiten Station (MS) übertragen wird, wobei in Zusammenhang mit dem jeweiligen Datenburst (B) ein Referenzsignal (RSi) gesendet wird;
wobei
i) in einem ersten Schritt ein erstes Referenzsignal von der zweiten Station (MS) an die erste Station (BS) gesendet wird;
ii) in einem zweiten Schritt in der ersten Station (BS) eine Kanalschätzung (KS) basierend auf dem von der zweiten Station (MS) empfangenen ersten Referenzsignal durchgeführt wird;
iii) in einem dritten Schritt die erste Station (BS) einen anhand der Kanalschätzung vorentzerrten Datenburst (B) an die zweite Station (MS) sendet;
iv) in einem vierten Schritt die erste Station (BS) ein anhand der Kanalschätzung verändertes zweites Referenzsignal an die zweite Station (MS) sendet; und
v) in einem fünften Schritt die zweite Station (MS) eine Synchronisierung des Datenburst (B) anhand des zweiten Referenzsignals durchführt.

2. Verfahren nach Anspruch 1, **dadurch gekennzeichnet, daß** mehrere verschiedene zweite Stationen (MS) vorhanden sind und für jede zweite Station (MS) ein individuelles erstes und zweites Referenzsignal gesendet wird.

3. Verfahren nach Anspruch 2, **dadurch gekennzeichnet, daß** das zweite Referenzsignal zur Vorentzerrung in der ersten Station (BS) um den Phasenwinkel der stärksten Kanalimpulsantwortkomponenete in negativer Richtung phasengedreht wird und um die Laufzeit des ersten Referenzsignals nach früh zeitverschoben wird.

4. Verfahren nach Anspruch 1, 2 oder 3, **dadurch gekennzeichnet, daß** die erste Station eine Basisstation und die zweite Station eine Mobilstation eines TDD-Mobilfunksystems ist.

5. Verfahren nach einem der Ansprüche 1 bis 4, **dadurch gekennzeichnet, daß** die Übertragung mittels dem CDMA-Verfahren durchgeführt wird.

6. Verfahren nach einem der Ansprüche 1 bis 5, **dadurch gekennzeichnet, daß** mehrere Datenströme entsprechend dem CDMA-Verfahren gleichzeitig übertragen werden.

7. Verfahren nach einem der vorhergehenden Ansprüche, **dadurch gekennzeichnet, daß** die Datenbursts (B) mindestens zwei Datenblöcke (DB1, DB2) aufweisen, zwischen denen ein Block angeordnet ist, der für das Referenzsignal (RSi) verwendet wird.

8. Vorrichtung zur Synchronisation von Datenübertragungseinrichtungen zur Durchführung des Verfahrens nach mindestens einem der vorhergehenden Ansprüche mit:
einer in der ersten Station (BS) vorgesehenen Referenzsignal-Modifizierungseinrichtung (RM) zum Modifizieren der Sendezeit und der Sendephase des zweiten Referenzsignals entsprechend dem Ergebnis der Kanalschätzung; und
einer in der zweiten Station (MS) vorgesehenen Synchronisierungseinrichtung zum Synchronisieren des Datenbursts (B) entsprechend dem von der ersten Station (BS) empfangenen modifizierten zweiten Referenzsignal.

## Claims

1. Method for synchronization of data transmission devices, in which a data signal in the form of a data stream of data bursts (B) is transmitted between a first station (BS) and a second station (MS), with a reference signal (RSi) being transmitted in conjunction with the respective data burst (B);
wherein
i) in a first step, a first reference signal is transmitted from the second station (MS) to the first station (BS);
ii) in a second step, a channel estimation process (KS) is carried out in the first station (BS), based on the first reference signal received by the second station (MS);
iii) in a third step, the first station (BS) transmits a data burst (B) which has been predistorted on the basis of the channel estimate, to the second station (MS);
iv) in a fourth step, the first station (BS) transmits a second reference signal, which has been changed on the basis of the channel estimate, to the second station (MS); and
v) in a fifth step, the second station (MS) synchronizes the data burst (B) on the basis of the second reference signal.

2. Method according to Claim 1, **characterized in that** two or more different second stations (MS) are provided, and an individual first and second reference signal are transmitted for each second station (MS).

3. Method according to Claim 2, **characterized in that** the second reference signal has its phase shifted through the phase angle of the strongest channel impulse response component in the negative direction for predistortion in the first station (BS) and is advanced in time by the delay time of the first reference signal.

4. Method according to Claim 1, 2 or 3, **characterized in that** the first station is a base station, and the second station is a mobile station, in a TDD mobile radio system.

5. Method according to one of Claims 1 to 4, **characterized in that** the CDMA method is used for transmission.

6. Method according to one of Claims 1 to 5, **characterized in that** two or more data streams are transmitted at the same time using the CDMA method.

7. Method according to one of the preceding claims, **characterized in that** the data bursts (B) have at least two data blocks (DB1, DB2), between which a block which is used for the reference signal (RSi) is arranged.

8. Apparatus for synchronization of data transmission devices for carrying out the method according to at least one of the preceding claims, having:
a reference signal modification device (RM), which is provided in the first station (BS), for modification of the transmission time and of the transmission phase of the second reference signal, corresponding to the result of the channel estimate; and
a synchronization device, which is provided in the second station (MS) for synchronization of the data burst (B), corresponding to the modified second reference signal received from the first station (BS).

## Revendications

1. Procédé de synchronisation d'installations de transmission de données dans lesquelles un signal de données est transmis en forme de flux de données de rafales de données (B) entre une première station (BS) et une deuxième station (MS), un signal de référence (RSi) étant envoyé en relation avec la rafale de données (B) respective ;
dans lequel
i) dans une première étape, un premier signal de référence est envoyé par la deuxième station (MS) à la première station (BS) ;
ii) dans une deuxième étape, une estimation de canal (KS) est effectuée dans la première station (BS) sur la base du premier signal de référence reçu de la deuxième station (MS) ;
iii) dans une troisième étape, la première station (BS) envoie à la deuxième station (MS) une rafale de données (B) pré-égalisée à l'aide de l'estimation de canal ;
iv) dans une quatrième étape, la première station (BS) envoie à la deuxième station (MS) un deuxième signal de référence modifié à l'aide de l'estimation de canal ; et
v) dans une cinquième étape, la deuxième station (MS) effectue une synchronisation de la rafale de données (B) à l'aide du deuxième signal de référence.

2. Procédé selon la revendication 1,
**caractérisé en ce qu'**
il existe plusieurs deuxièmes stations (MS) différentes et pour chaque deuxième station (MS) un premier et un deuxième signal de référence individuels sont envoyés.

3. Procédé selon la revendication 2,
**caractérisé en ce que**
pour la pré-égalisation dans la première station (BS), le deuxième signal de référence est déphasé négativement de l'angle de phase de la composante de réponse d'impulsion de canal la plus forte et décalé dans le temps de la durée du premier signal de référence vers une position précédente.

4. Procédé selon la revendication 1, 2 ou 3,
**caractérisé en ce que**
la première station est une station de base et la deuxième station une station mobile d'un système de radiocommunication mobile TDD.

5. Procédé selon l'une quelconque des revendications 1 à 4,
**caractérisé en ce que**
la transmission s'effectue au moyen du procédé AMRC.

6. Procédé selon l'une quelconque des revendications 1 à 5,
**caractérisé en ce que**
plusieurs flux de données sont transmis simultanément selon le procédé AMRC.

7. Procédé selon l'une quelconque des revendications précédentes,
**caractérisé en ce que**
les rafales de données (B) présentent au moins deux blocs de données (DB1, DB2) entre lesquels un bloc est utilisé pour le signal de référence (RSi).

8. Dispositif de synchronisation d'installations de transmission de données pour la mise en oeuvre du procédé selon au moins l'une quelconque des revendications précédentes, comprenant :
- une installation de modification (RM) du signal de référence prévue dans la première station (BS) pour modifier le temps d'émission et la phase d'émission du deuxième signal de référence en fonction du résultat de l'estimation de canal ; et
- une installation de synchronisation prévue dans la deuxième station (MS) pour synchroniser la rafale de données (B) en fonction du deuxième signal de référence modifié reçu de la première station (BS).
